# EUROPÄISCHE PATENTSCHRIFT

(11) **EP 3 693 216 B1**
(45) Veröffentlichungstag und Bekanntmachung des Hinweises auf die Patenterteilung: **13.10.2021**
(21) Anmeldenummer: 20152103.6
(22) Anmeldetag: 16.01.2020
(51) Int. Cl.: B60P 7/08

(54) **SPANNVORRICHTUNG FÜR BÄNDER**
TENSION DEVICE FOR STRIPS
DISPOSITIF DE SERRAGE POUR BANDES

(30) Priorität: 06.02.2019 DE 102019102914; 24.04.2019 DE 102019110559
(43) Veröffentlichungstag der Anmeldung: 12.08.2020
(73) Patentinhaber: Saygivar, Lisa Marie, Rostrevor BT34 3AB (GB); Saygivar, Fiona Gabriella, Rostrevor, Nord-Irland BT34 3AB (GB); Saygivar, Sharon Naomi, Rostrevor, Nord-Ireland BT34 3AB (GB)
(72) Erfinder: Saygivar, Lisa Marie, Rostrevor BT34 3AB (GB); Saygivar, Fiona Gabriella, Rostrevor, Nord-Irland BT34 3AB (GB); Saygivar, Sharon Naomi, Rostrevor, Nord-Ireland BT34 3AB (GB)
(74) Vertreter: Heyerhoff Geiger & Partner Patentanwälte PartGmbB

(56) Entgegenhaltungen:
- DE-A1-102009 055 740
- DE-B3-102006 044 024
- US-A1- 2008 201 922
- US-A1- 2009 224 219

## Beschreibung

Die Erfindung betrifft eine Spannvorrichtung für Bänder, insbesondere für Gurte. Insbesondere betrifft die Erfindung eine kraftabhängige Gurtspannvorrichtung.

Gurtspannsysteme mit einer Spannvorrichtung für Gurte werden hauptsächlich zur Ladungssicherung oder als wiederverwertbare temporäre Befestigungen von Maschinen, Paletten oder Ähnlichem verwendet.

Die meisten heutzutage sich am Markt befindlichen Spannsysteme basieren auf der Grundlage, dass ein an mindestens 2 stationären Fixpunkten fest verankertes Gurtband mittels eines mechanischen Wickelsystems die Bandlänge über einen Mitnahme-Mechanismus etappenweise verkürzt und gleichzeitig gegen Zurückziehen gesichert wird. Dabei erhöht sich beim Erreichen eines Widerstandes die Spannung des Gurtbandes kontinuierlich. Diese Methode hat sich in der Praxis als zweckmäßig erwiesen.

Die Nachteile dieser Spannsysteme bestehen aber darin, dass grundsätzlich keine Möglichkeit besteht, eine geforderte oder erwünschte Spannung des Gurtbandes anzustreben oder sogar garantieren zu können.

Die Spannkraft dieser Spannsysteme ist grundsätzlich immer vom individuellen Kraftaufwand der Person abhängig, die den Spannvorgang durchführt.

Aus diesem Grund besteht immer die Möglichkeit, ein Gurtband zu viel oder zu wenig als angestrebt oder vorgeschrieben zu spannen.

US 2008/0201922 A1 betrifft ein Verzurrgerät mit einem Handgriff, der zwischen zwei Seitenplatten angeordnet ist. Die Seitenplatten werden von ersten und zweiten Verbindungsstücken gebildet. Die ersten Verbindungsstücke sind fest mit dem Handgriff verbunden, während die zweiten Verbindungsstücke mit einer Spule zum Aufwickeln eines Bandes verdrehfest verbunden sind. Um den Spannstift ist eine Feder gewickelt, deren Enden an Querstreben zwischen den zwei Seitenplatten fixiert sind. Wenn eine zum Festzurren des Bands ausgeübte Kraft beim Betätigen des Handgriffs eine durch die Feder ausgeübte elastische Kraft erreicht oder überschreitet, knicken die ersten und zweiten Verbindungsstücke der beiden Seitenplatten gegeneinander ab. Dies zeigt einem Benutzer an, dass die mit dem Verzurrgerät ausgeübte Spannkraft ausreichend ist.

Alternativ kann eine Kontrolle der tatsächlich erzielten Gurtspannung nachträglich mit eigens dafür konzipierten Messwerkzeugen überprüft werden.

Der Erfindung liegt die Aufgabe zugrunde, eine verbesserte Spannvorrichtung für Bänder, insbesondere für Gurte, zur Verfügung zu stellen.

Die Aufgabe wird gelöst durch eine Spannvorrichtung gemäß Anspruch 1 für Bänder, insbesondere für Gurte, welche ein dynamisch wirkendes Element aufweist, mittels welchem eine Kraftübertragung bei der Spannvorrichtung indirekt erfolgt.

Das heißt, dass das dynamisch wirkende Element zur indirekten Kraftübertragung eingerichtet ist.

Bei der Kraftübertagung wird vorzugsweise eine von einem Anwender erzeugte Kraft übertragen.

Bei einer indirekten Kraftübertragung wird zweckmäßigerweise die erzeugte Kraft des Anwenders nicht direkt - beispielsweise über einen Spannhebel - in die Spannvorrichtung eingeleitet. Zweckmäßigerweise erfolgt die Kraftübertragung des Anwenders - in Bezug auf den Spannhebel - nämlich indirekt (d. h., nicht über den Spannhebel, sondern) über ein dynamisch wirkendes Element.

Das heißt, als Kraft übertragendes Glied dient (in diesem Fall nicht der Spannhebel, sondern) das dynamisch wirkende Element. Mit der Spannvorrichtung kann so ein System geschaffen werden, dass sich beim Erreichen der mindestens geforderten Spannkraft eines Bandes, insbesondere eines Gurtes, vorzugsweise automatisch sperrt und zugleich ein weiteres Spannen (Überspannen) verhindert.

Insbesondere können außerdem alle Vorteile einer herkömmlichen Spannvorrichtung genutzt werden.

Es ist vorteilhaft, wenn die Spannvorrichtung eine Kupplung aufweist. Zweckmäßigerweise ist die Spannvorrichtung dazu eingerichtet, eine Kraft indirekt über das dynamisch wirkende Element auf die Kupplung zu übertragen.

Weiter ist es vorteilhaft, wenn die Spannvorrichtung ein mit der Kupplung verbundenes Drehelement aufweist. Zweckmäßigerweise ist die Spannvorrichtung dazu eingerichtet, eine Kraft indirekt über das dynamisch wirkende Element auf die Kupplung zu übertragen, sodass das Drehelement, insbesondere zum Spannen eines Bandes, gedreht wird.

Es ist bevorzugt, wenn das Drehelement zumindest ein stabförmiges Element aufweist. Das stabförmige Element kann beispielsweise ein Bolzen, insbesondere ein Verbindungsbolzen, sein. Beispielsweise kann das Drehelement zwei stabförmige Elemente, insbesondere Bolzen, aufweisen.

Vorzugsweise sind die stabförmigen Elemente des Drehelements umeinander drehbar. Prinzipiell kann das Drehelement auch anders ausgebildet sein.

Es ist zweckmäßig, wenn das dynamisch wirkende Element unter der Kraftübertragung verbiegbar und/oder verdrehbar ist.

Das heißt, als Kraft übertragendes Glied dient das dynamisch wirkende Element, welches "dynamisch wirkend" sich zweckmäßigerweise bei Kraftübertragung beispielsweise verbiegt ("Biegeelement") und/oder verdreht ("Torsionselement").

Insbesondere kann das dynamisch wirkende Element eine kraftabhängige Verbiegung und/oder Verdrehung aufweisen. Das heißt, dass das dynamisch wirkende Element in Abhängigkeit der auf das Element wirkenden Kraft verbogen und/oder verdreht sein kann. Insbesondere kann der Grad der Verbiegung und/oder Verdrehung abhängig von der auf das Element wirkenden Kraft sein.

Die Spannvorrichtung weist erfindungsgemäß einen Verriegelungsmechanismus auf.

Der Verriegelungsmechanismus ist dazu eingerichtet, in Abhängigkeit der mittels des dynamisch wirkenden Elements übertragenen Kraft die Spannvorrichtung zu verriegeln. Das heißt, dass der Verriegelungsmechanismus vorzugsweise kraftabhängig wirkt.

Insbesondere kann der Verriegelungsmechanismus dazu eingerichtet sein, bei einer vorgegebenen mittels des dynamisch wirkenden Elements übertragenen Kraft die Spannvorrichtung zu verriegeln.

Beispielsweise kann der Verriegelungsmechanismus dazu eingerichtet sein, bei einer vorgegebenen Verbiegung und/oder Verdrehung des dynamisch wirkenden Elements die Spannvorrichtung zu verriegeln.

Auf diese Weise kann die durch das Verbiegen/Verdrehen des dynamisch wirkenden Elementes in Bezug zur Spannvorrichtung entstehende geometrische Differenz ab einem vorgegebenen Wert zur automatischen Verriegelung der Spannvorrichtung führen.

Mit der Spannvorrichtung kann so ein System geschaffen werden, dass sich beim Erreichen der mindestens geforderten Spannkraft eines Bandes, insbesondere eines Gurtes, automatisch sperrt und zugleich ein weiteres Spannen (Überspannen) verhindert. Insbesondere kann sich die Spannvorrichtung beim Erreichen der angestrebten Gurtspannung unabhängig vom Anwender selbständig verriegeln.

Weiter kann mit der Spannvorrichtung ein selbständiges Zurückdrehen der Spannvorrichtung unter Last mechanisch verhindert und die erzielte Spannkraft des Bandes bzw. des Gurtes dauerhaft gewährleistet werden.

Es ist vorteilhaft, wenn die Spannvorrichtung dazu eingerichtet ist, dass die Kraftübertragung bis zur Verriegelung der Spannvorrichtung mittels des dynamisch wirkenden Elements, d. h. indirekt, erfolgt. Das heißt, dass vorzugsweise die Kraftübertragung bis zur Verriegelung der Spannvorrichtung mittels des dynamisch wirkenden Elements, d. h. indirekt, erfolgt.

In einer vorteilhaften Ausgestaltung der Erfindung umfasst der Verriegelungsmechanismus zur Verriegelung der Spannvorrichtung eine Verriegelungsstufe, die zur formschlüssigen Sperrung der Spannvorrichtung eingerichtet ist. Das heißt, vorzugsweise ist diese Verriegelungsstufe dazu eingerichtet, die Spannvorrichtung formschlüssig zu sperren.

Auf diese Weise kann ein unbeabsichtigtes oder versehentliches Lösen der Spannvorrichtung vermieden/verhindert werden. Weiter kann auf diese Weise ein Lösen und/oder Weiterspannen durch den Anwender formschlüssig verhindert werden.

Zweckmäßigerweise umfasst die Spannvorrichtung einen Spannhebel.

Der Spannhebel befindet sich vorzugsweise bei der indirekten Kraftübertragung mittels des dynamisch wirkenden Elements im Leerlauf. Ein Spannhebel, der sich im Leerlauf befindet, überträgt zweckmäßigerweise keine Kraft. Vorzugsweise ist der Spannhebel im Leerlauf drehbar um die Kupplung gelagert, ohne eine Kraft - insbesondere auf die Kupplung - zu übertragen.

Auf diese Weise kann eine indirekte Kraftübertragung gewährleistet werden.

Der Spannhebel befindet sich vorzugsweise bis zur Verriegelung der Spannvorrichtung im Leerlauf. Das heißt, dass der Spannhebel vorzugsweise bis zur Verriegelung der Spannvorrichtung keine Kraft überträgt.

Auf diese Weise kann ermöglicht werden, dass die Kraftübertragung bis zur Verriegelung der Spannvorrichtung nur über das dynamisch wirkende Element, d. h. indirekt, erfolgt.

In einer bevorzugten Ausgestaltung der Erfindung umfasst der Verriegelungsmechanismus zur Verriegelung der Spannvorrichtung zwei Verriegelungsstufen. Eine der zwei Verriegelungsstufen kann die zuvor genannte Verriegelungsstufe sein.

Vorzugsweise ist der Spannhebel zur formschlüssigen Kraftübertragung zwischen den beiden Verriegelungsstufen des Verriegelungsmechanismus eingerichtet. Das heißt, dass der Spannhebel vorzugsweise dazu eingerichtet ist, zwischen den beiden Verriegelungsstufen unter Formschluss eine Kraft - insbesondere auf die Kupplung - zu übertragen. Die (formschlüssige) Kraftübertragung mittels des Spannhebels kann als direkte Kraftübertragung aufgefasst werden.

Das dynamisch wirkende Element kann beispielsweise ein Federstab sein. Weiter kann das dynamisch wirkende Element eine Schenkelfeder sein. Ferner kann das dynamisch wirkende Element eine Drehfeder sein. Außerdem kann das dynamisch wirkende Element beispielsweise ein Torsionselement sein.

Ferner ist die Erfindung gerichtet auf eine Verwendung der zuvor genannten Spannvorrichtung und/oder eine seiner Weiterbildungen zum Spannen eines Bandes, insbesondere eines Gurtes.

Vorzugsweise wird oder ist ein Band derart in die Spannvorrichtung eingelegt, dass das Band zumindest an einem Drehelement der Spannvorrichtung anliegt. Beispielsweise kann das Band derart in die Spannvorrichtung eingelegt werden/sein, dass das Band durch das Drehelement der Spannvorrichtung hindurch geführt wird/ist.

Das im Zusammenhang mit der Verwendung genannte Drehelement ist vorzugsweise das zuvor genannte Drehelement der Spannvorrichtung.

Weiter ist es bevorzugt, wenn eine Kraft indirekt über das dynamisch wirkende Element auf eine Kupplung der Spannvorrichtung übertragen wird, sodass das mit der Kupplung verbundene Drehelement gedreht wird, wobei das Band bei der Drehbewegung des Drehelements gespannt wird.

Es ist bevorzugt, wenn die im Zusammenhang mit der Verwendung genannte Kupplung die zuvor genannte Kupplung ist. Weiter ist es bevorzugt, wenn das im Zusammenhang mit der Verwendung genannte Drehelement das zuvor genannte Drehelement ist. Vorzugsweise wird das dynamisch wirkende Element in Abhängigkeit der auf das Element wirkenden Kraft verbogen und/oder verdreht.

Weiter ist es bevorzugt, wenn die Spannvorrichtung bei einer vorgegebenen Verbiegung und/oder Verdrehung des dynamisch wirkenden Elements verriegelt wird.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale.

Es zeigen:
- FIG 1: eine Spannvorrichtung für Bänder in ihren entriegelten Zustand,
- FIG 2: die Kupplung und den Sperrbolzen der Spannvorrichtung aus FIG 1,
- FIG 3: den Spannhebel und das dynamisch wirkende Element der Spannvorrichtung aus FIG 1 in einem unbelasteten Zustand,
- FIG 4: den Spannhebel und das dynamisch wirkende Element aus FIG 3 im Zustand der maximalen Kraftübertragung,
- FIG 5: die Spannvorrichtung aus FIG 1 in ihrem verriegelten Zustand und
- FIG 6: ein Spannsystem mit der Spannvorrichtung aus FIG 1, wobei ein Gurt in das Spannsystem eingelegt ist.

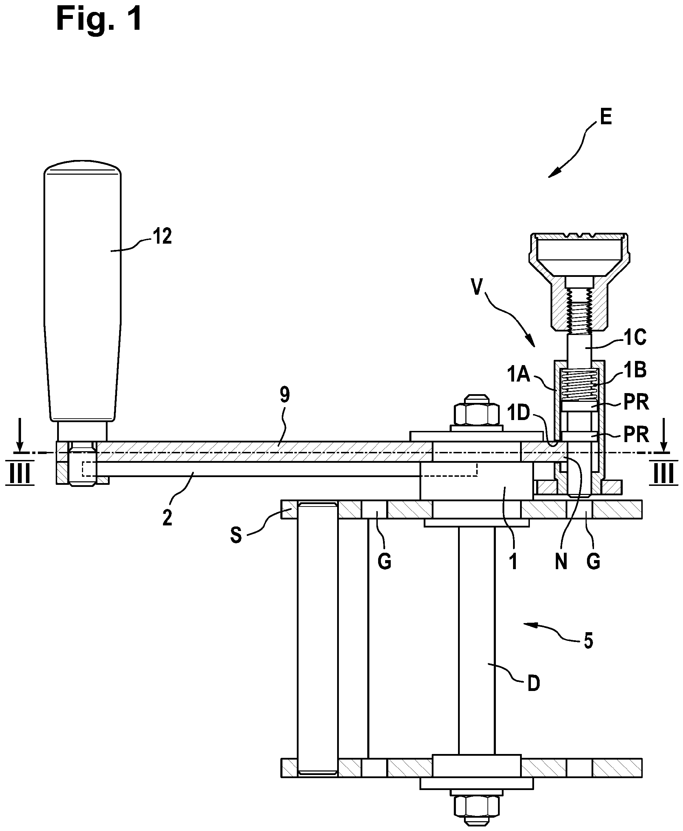

FIG 1 zeigt schematisch eine Spannvorrichtung E für Bänder in einer Schnittdarstellung. Die Spannvorrichtung E ist in diesem Beispiel als Spannvorrichtung E für einen Gurt, kurz Gurtspannvorrichtung, ausgebildet. Die Spannvorrichtung kann auch zum Spannen eines beliebigen Bandes (anstatt des hier als Gurt, auch Gurtband, ausgebildeten Bandes) geeignet sein.

Die Spannvorrichtung E umfasst eine Kupplung 1 und ein mit der Kupplung 1 verbundenes Drehelement 5. Das Drehelement 5 weist in diesem Beispiel zwei stabförmige Elemente D auf. Die stabförmigen Elemente D sind in diesem Beispiel als Bolzen, insbesondere als Verbindungsbolzen, ausbildet. Die zwei stabförmigen Elemente D sind umeinander drehbar. Das Drehelement 5 kann prinzipiell auch anders ausgeführt sein.

Die Kupplung 1 und das Drehelement 5 sind in eine Spange S der Spannvorrichtung E eingesetzt.

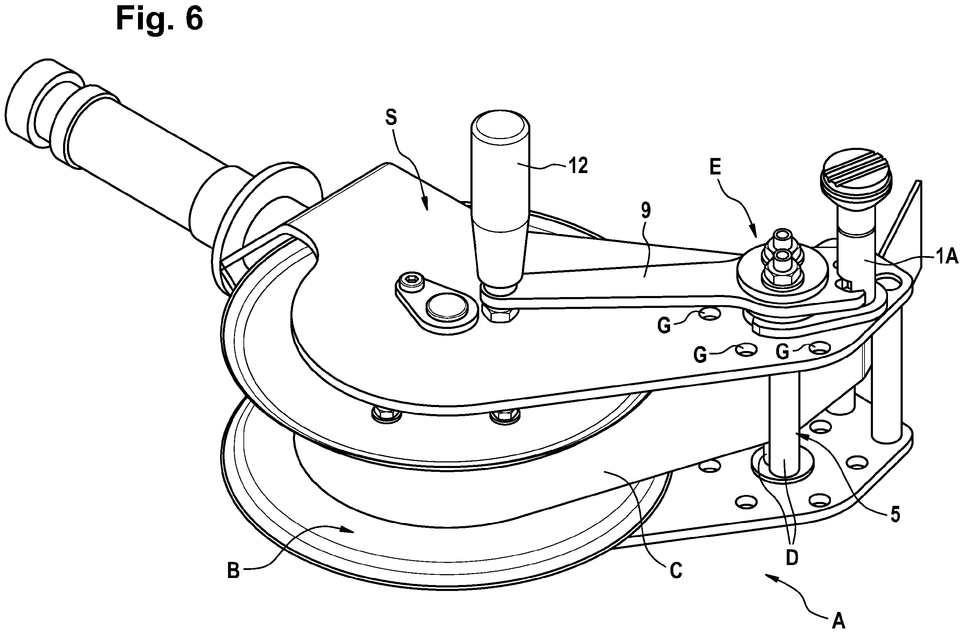

Wird eine Kraft auf die Kupplung 1 übertragen, dann wird (unter bestimmten Bedingungen, insbesondere bei ausreichender Kraft) das Drehelement 5 gedreht. Unter Verwendung der Drehbewegung kann ein zumindest an dem Drehelement 5 anliegender Gurt, insbesondere ein durch das Drehelement 5 hindurchgeführter Gurt, (nicht gezeigt, vgl. FIG 6) gespannt werden. Das heißt, dass aufgrund der Drehbewegung des Drehelements 5 ein Gurt gespannt werden kann. Die Drehbewegung des Drehelements 5 ist eine Drehbewegung um die eigene Achse, d. h. eine Rotation um die eigene Achse.

Wird das Drehelement 5 gedreht, so wird es gegenüber der Spange S gedreht. Das heißt, dass die Drehbewegung des Drehelements 5 eine Drehbewegung gegenüber der Spange S ist.

Wird das Drehelement 5 gedreht, so werden in diesem Beispiel die als Bolzen ausgeführten stabförmigen Elemente D umeinander gedreht. Aufgrund der Drehbewegung des Drehelements 5 kann der zuvor genannte Gurt um die als Bolzen ausgeführten stabförmigen Elemente D gewickelt werden.

Weiter umfasst die Spannvorrichtung E ein dynamisch wirkendes Element 2. Mittels des dynamisch wirkenden Elements 2 erfolgt die Kraftübertragung bei der Spannvorrichtung E indirekt.

Insbesondere ist die Spannvorrichtung E dazu eingerichtet, die Kraft indirekt über das dynamisch wirkende Element 2 auf die Kupplung 1 zu übertragen, sodass das Drehelement 5 zum Spannen eines Gurts gedreht wird.

Das heißt, wenn von einem Anwender eine Kraft ausgeübt wird, dann wird diese Kraft indirekt über das dynamisch wirkende Element 2 auf die Kupplung 1 übertragen.

Das dynamisch wirkende Element 2 ist in diesem Ausführungsbeispiel ein Federstab. Das dynamisch wirkende Element 2 könnte auch eine Schenkelfeder, eine Drehfeder, ein Torsionselement o. Ä. sein.

Das dynamisch wirkende Element 2 ist in diesem Beispiel unter der Kraftübertragung verbiegbar. Prinzipiell könnte das dynamisch wirkende Element 2 auch verdrehbar sein.

Insbesondere weist das dynamisch wirkende Element 2 eine kraftabhängige Verbiegung auf.

Überträgt das dynamisch wirkende Element 2 keine Kraft, dann ist es nicht verbogen, d. h. seine Verbiegung beträgt Null. Je höher die Kraft ist, die das dynamisch wirkende Element 2 überträgt, desto mehr ist das dynamisch wirkende Element 2 verbogen, d. h. desto höher ist die Verbiegung.

Die Spannvorrichtung E umfasst einen Spannhebel 9. Bei der indirekten Kraftübertragung mittels des dynamisch wirkenden Elements 2 befindet sich der Spannhebel 9 im Leerlauf.

Im Leerlauf ist der Spannhebel 9 nicht mit der Kupplung 1 gekuppelt. Insbesondere ist der Spannhebel 9 im Leerlauf drehbar um die Kupplung 1 gelagert, ohne eine Kraft auf die Kupplung 1 zu übertragen. Auf diese Weise kann eine indirekte Kraftübertragung mittels des dynamisch wirkenden Elements 2 gewährleistet werden. Weiter kann auf diese Weise eine direkte Kraftübertragung mittels des Spannhebels 9 vermieden werden.

Außerdem umfasst die Spannvorrichtung E eine Kurbel 12. Der Anwender kann Kraft auf die Kurbel 12 ausüben. Insbesondere kann der Anwender die Kurbel 12 um die Kupplung 1 drehen.

Die Kurbel 12 ist mit dem dynamisch wirkenden Element 2 verbunden. Außerdem ist die Kurbel 12 mit dem Spannhebel 9 verbunden. Die Kurbel 12 könnte prinzipiell auch als Teil des Spannhebels 9 aufgefasst werden.

Mittels der Kurbel 12 kann eine vom Anwender ausgeübte Kraft auf das dynamisch wirkende Element 2 und auf den Spannhebel 9 übertragen werden.

Die Spannvorrichtung E umfasst außerdem einen Verriegelungsmechanismus V. Mittels des Verriegelungsmechanismus V kann die Spannvorrichtung E von einem entriegelten, d. h. entsperrten, Zustand in einen verriegelten Zustand gebracht werden ("Verriegelung"). Weiter kann die Spannvorrichtung E mittels des Verriegelungsmechanismus V von dem verriegelten Zustand in den entriegelten Zustand gebracht werden ("Entriegelung").

Die Verrieglung erfolgt automatisch/selbstständig, insbesondere ohne manuelle Betätigung des Verriegelungsmechanismus V. Die Entriegelung erfolgt manuell.

Der Verriegelungsmechanismus V ist dazu eingerichtet, in Abhängigkeit der mittels des dynamisch wirkenden Elements 2 übertragenen Kraft die Spannvorrichtung E zu verriegeln. Das heißt, dass der Verriegelungsmechanismus V kraftabhängig wirkt. Insbesondere ist der Verriegelungsmechanismus V dazu eingerichtet, bei einer vorgegebenen Verbiegung des dynamisch wirkenden Elements 2 die Spannvorrichtung E zu verriegeln.

Wenn die mittels des dynamisch wirkenden Elements 2 übertragene Kraft einen vorgegebenen Wert annimmt, dann entspricht die Verbiegung des dynamisch wirkenden Elements 2 der vorgegebenen Verbiegung, und dann verriegelt der Verriegelungsmechanismus V die Spannvorrichtung E.

Der Verriegelungspunkt (d. h. die anzuwendende Kraft bzw. die vorgegebene Verbiegung, bei der der Verriegelungsmechanismus V verriegelt) kann konstruktiv vorgegeben sein und/oder mechanisch einstellbar sein.

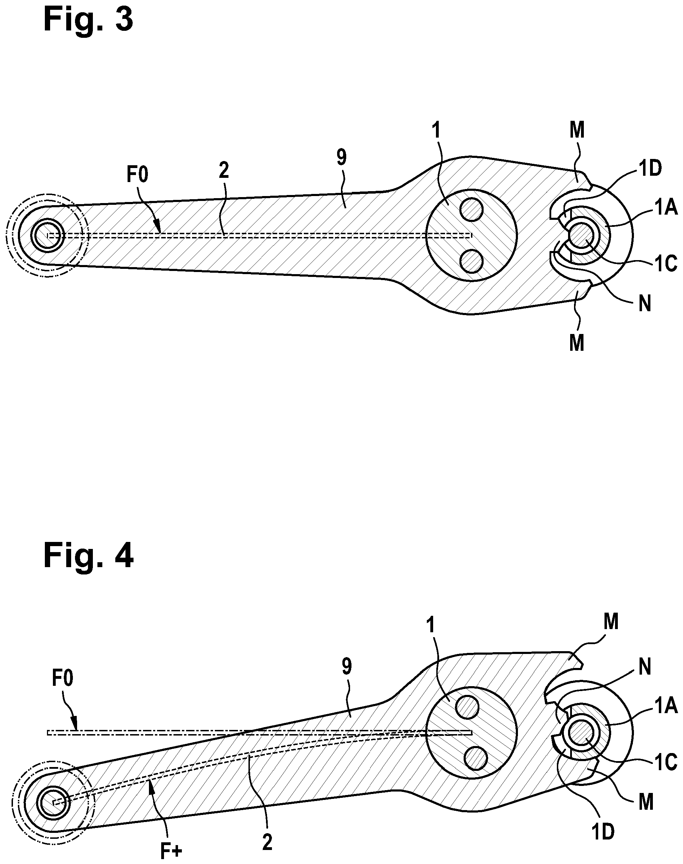

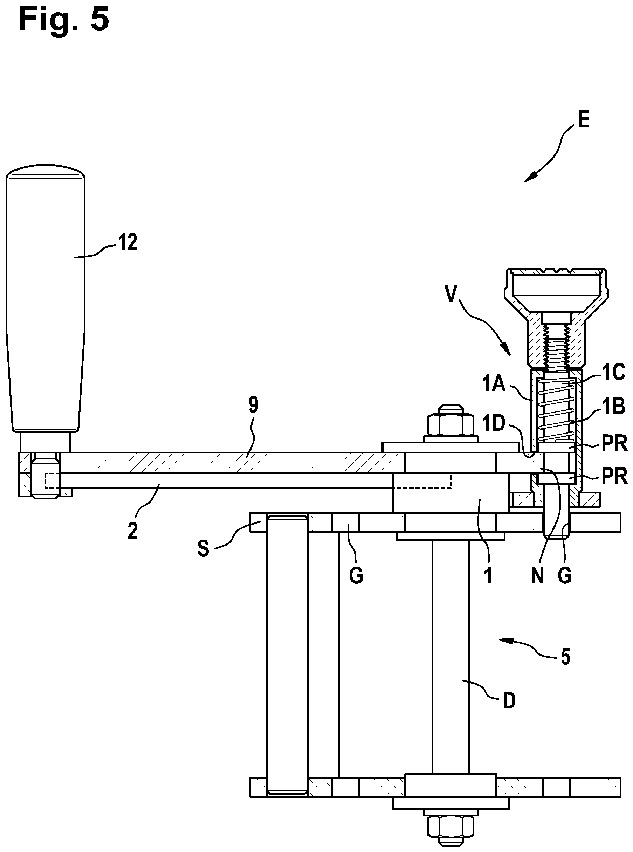

Der Verriegelungsmechanismus V umfasst einen Sperrbolzen 1C und eine Druckfeder 1B. In diesem Ausführungsbeispiel umfasst der Verriegelungsmechanismus V zwei Verriegelungsstufen (vgl. FIG 4 und FIG 5). Unter Verwendung der Verriegelungsstufen findet die Verriegelung stufenweise statt.

Die Kupplung 1 weist ein Führungsrohr 1A auf. In dem Führungsrohr 1A der Kupplung 1 befindet sich der Sperrbolzen 1C. Der Sperrbolzen 1C wird durch die Druckfeder 1B in Richtung der Spange S bzw. gegen die Spange S der Spannvorrichtung E gedrückt. Der Sperrbolzen 1C weist zumindest einen, hier zwei, Positionsring(e) PR auf.

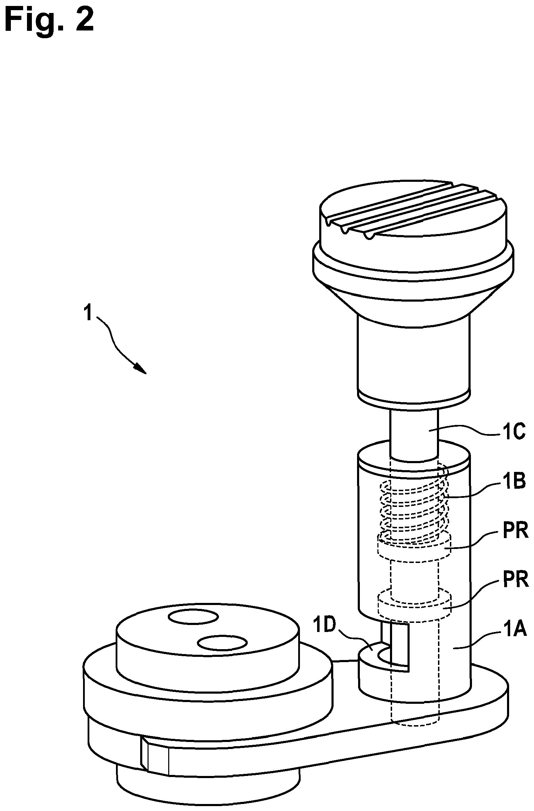

FIG 2 zeigt die Kupplung 1 und den Sperrbolzen 1C aus FIG 1 in einer dreidimensionalen Ansicht.

Das Führungsrohr 1A weist eine Aussparung 1D auf (vgl. FIG 1, FIG 2) .

Der Spannhebel 9 weist eine Nase N auf (vgl. FIG 1, FIG 3). Der Spannhebel 9 weist außerdem seitlich angeordnete Mitnahmeklauen M auf (vgl. FIG 3).

Ferner weist die Spange S zumindest eine, hier mehrere, Arretierungsbohrung(en) G auf.

In FIG 1 ist der entriegelte Zustand des Verriegelungsmechanismus V gezeigt. Das heißt, in FIG 2 ist die Spannvorrichtung entriegelt:
Die Nase N des Spannhebels 9 ragt in die Aussparung 1D des Führungsrohrs 1A hinein.

Im entriegelten, d. h. entsperrten, Zustand wird der Sperrbolzen 1C an einem seiner zwei Positionsringe PR durch die Nase N des Spannhebels 9 im gezogenen (entsperrten) Zustand gehalten.

Insbesondere liegt im entriegelten Zustand einer der Positionsringe PR des Sperrbolzens 1C, hier der zeichnungsgemäß untere Positionsring PR, an der Nase N des Spannhebels 9 an und wird gegen diese Nase N gedrückt. Das heißt, die Nase N des Spannhebels 9 ragt derart in die Aussparung 1D des Führungsrohrs 1A hinein, dass einer der Positionsringe PR, hier der untere Positionsring PR, des Sperrbolzens 1C gegen die Nase N gedrückt wird.

Auf diese Weise kann ein Einrasten des Sperrbolzens 1C in die Spange S und somit ein Verriegeln verhindert werden.

Die Kraftübertragung erfolgt bei der Spannvorrichtung E im entriegelten Zustand, d. h. bis zur Verriegelung der Spannvorrichtung E, mittels des dynamisch wirkenden Elements 2.

In die Spannvorrichtung E kann ein Gurt C eingelegt werden. Insbesondere kann der Gurt C derart in die Spannvorrichtung E eingelegt werden, dass der Gurt C zumindest an dem Drehelement 5 der Spannvorrichtung E anliegt (nicht gezeigt, vgl. FIG 6). Beispielsweise kann der Gurt C derart in die Spannvorrichtung E eingelegt werden, dass der Gurt C durch das Drehelement 5, insbesondere zwischen den beiden stabförmigen Elementen D des Drehelements 5, hindurchgeführt wird.

In FIG 1 ist außerdem eine Schnittebene III - III eingezeichnet.

FIG 3 zeigt den Spannhebel 9 und die Kupplung 1 aus FIG 1 als Schnittdarstellung entlang der Schnittebene III - III. Obwohl das dynamisch wirkende Element 2 von dem Spannhebel 9 verdeckt ist, ist seine Stellung in FIG 3 angedeutet.

Der Spannhebel 9 und das dynamisch wirkende Element 2 befinden sich in einem unbelasteten Zustand ohne Kraftübertragung (Zustand "F0").

Da das dynamisch wirkende Element 2 keine Kraft überträgt, wird es nicht verbogen, d. h. seine Verbiegung beträgt Null. Das dynamische Element 2 ist also in seinem Ausgangszustand. Der Spannhebel 9 ist ohne Formschluss und ohne Kraftschluss um das Zentrum der Kupplung 1 drehbar gelagert. Insbesondere sind die Mitnahmeklauen M des Spannhebels 9 beabstandet zu dem Führungsrohr 1A angeordnet.

Insbesondere ist der Spannhebel 9 bis zum Anschlagen an einer der beiden Mitnahmeklauen M ohne Form- oder Kraftschluss um das Zentrum der Kupplung 1 drehbar gelagert.

Ausgehend vom entsperrten Zustand in FIG 1 hält das dynamisch wirkende Element 2 im unbelasteten Zustand F0 den Spannhebel 9 in der Mitte der Kupplung 1 (siehe FIG 3) und die Nase N fixiert dabei den Sperrbolzen 1C ("entsperrter Zustand", vgl. FIG 1).

Wenn ausgehend von dem unbelasteten Zustand F0 (FIG 3) ein Anwender an der Kurbel 12 dreht, so übt er eine Kraft auf die Kurbel 12 aus. Die vom Anwender ausgeübte Kraft wird auf das dynamisch wirkende Element 2 und auf den Spannhebel 9 übertragen. Auf diese Weise werden sowohl das dynamisch wirkende Element 2 als auch der Spannhebel 9 um die Kupplung herum gedreht.

Da sich der Spannhebel im Leerlauf befindet, überträgt der Spannhebel keine Kraft auf die Kupplung 1. Die vom Anwender ausgeübte Kraft wird über das als Federstab ausgebildete dynamisch wirkende Element 2, d. h. indirekt, auf die Kupplung 1 übertragen. Die Kupplung 1 sowie ihr Führungsrohr 1A werden auf diese Weise gedreht.

Ist ein Gurt C in die Spannvorrichtung E eingelegt, dann beginnt sich der Gurt C zu spannen.

Die Kraft wird indirekt über das dynamisch wirkende Element 2 auf die Kupplung 1 der Spannvorrichtung E übertragen, sodass das mit der Kupplung 1 verbundene Drehelement 5 gedreht wird. Das Band C wird bei der Drehbewegung des Drehelements 5 gespannt.

Bei zunehmender Spannung des Gurtes C muss der Anwender die angewendete Kraft steigern. Da bei zunehmender Spannung des Gurtes C die vom Anwender erzeugte Kraft steigt, steigt auch die durch das als Federstab ausgeführte dynamisch wirkende Element 2 übertragene Kraft. Dieses führt zur einer kontinuierlichen kraftabhängigen Verbiegung des als Federstab ausgeführten dynamisch wirkenden Elements 2. Das heißt, dass das dynamisch wirkende Element 2 in Abhängigkeit der auf das Element 2 wirkenden Kraft verbogen wird.

Je höher die Kraft ist, die das dynamisch wirkende Element 2 überträgt, desto mehr wird das dynamisch wirkende Element 2 verbogen, d. h. desto höher ist die Verbiegung.

Beim Erreichen des konstruktiv vorgegebenen Maximal-Biegewinkels, d. h. beim Erreichen der konstruktiv vorgegebenen maximalen Verbiegung, ist die maximal durch das als Federstab ausgeführte dynamisch wirkende Element 2 übertragbare Kraft erreicht (Zustand "F+"). Somit ist eine mit dem Zustand F+ zusammenhängende minimal angestrebte Gurtspannung erreicht.

In FIG 4 ist der Spannhebel 9 und die Kupplung 1 aus FIG 3 im Zustand der maximalen Kraftübertragung (Zustand F+) dargestellt. Auch die Stellung des dynamisch wirkenden Elements 2 im Zustand F+ ist in FIG 4 sichtbar. Zum Vergleich ist in FIG 4 außerdem die Stellung des dynamisch wirkenden Elements 2 im Zustand F0 gestrichelt angedeutet.

Die Spannvorrichtung E wird bei einer vorgegebenen Verbiegung des dynamisch wirkenden Elements 2, nämlich beim Erreichen des konstruktiv vorgegebenen Maximal-Biegewinkels (Zustand "F+"), verriegelt. Hier erfolgt die Verrieglung stufenweise in zwei Verriegelungsstufen.

Beim Erreichen des Zustands F+ wird die erste Verriegelungsstufe erreicht.

Im Zustand F+, d. h. beim Erreichen der minimal angestrebten Gurtspannung im Punkt F+, ist der Spannhebel 9 so weit ausgerückt, dass die Nase N des Spannhebels 9 den zeichnungsgemäß unteren Positionsring PR des Sperrbolzens 1C freigibt und der Sperrbolzen 1C durch die Druckfeder 1B gegen die Spange S gedrückt wird.

Wenn der Sperrbolzen 1C gegen die Spange S gedrückt wird, dann befindet sich der Verrieglungsmechanismus V in seiner ersten Verriegelungsstufe.

In der Regel ist beim Erreichen des Zustands F+ keine Arretierungsbohrung G derart positioniert, dass der Sperrbolzen 1C direkt in diese Arretierungsbohrung G eingreifen/einrasten könnte.

Im Zustand F+ ist der Spannhebel 9 derart positioniert, dass eine der Mitnahmeklauen M an dem Führungsrohr 1A anschlägt. Auf diese Weise ist im Zustand F+ der Spannhebel 9 derart positioniert, dass der Spannhebel 9 eine formschlüssige Kraftübertragung herstellt.

Die im Zustand F+ von einem Anwender ausgeübte Kraft wird direkt über den Spannhebel 9 formschlüssig auf die Kupplung 1 übertragen. Insbesondere wird im Zustand F+ die von einem Anwender ausgeübte Kraft über die an dem Führungsrohr 1A anschlagende Mitnahmeklauen M des Spannhebels 9 auf das Führungsrohr 1A der Kupplung 1 übertragen.

Ausgehend vom Zustand F+ (FIG 4) bewirkt die vom Anwender ausgeübte Kraft ein Drehen des Drehelements D, sodass ein in die Spannvorrichtung E eingelegtes Band C weiter gespannt werden kann.

Ausgehend vom Zustand F+ (FIG 4), d. h. nach dem Erreichen des Punktes F+, erfolgt ein noch weiteres Spannen des Gurtes mit formschlüssiger Kraftübertragung über die Mitnahmeklaue M solange, bis der Sperrbolzen 1C in eine der Arretierungsbohrungen G an der Spange S einrastet. Auf diese Weise wird eine formschlüssige Sperrung der Spannvorrichtung E erreicht.

Aufgrund des weiteren Spannens des Gurtes ausgehend vom Zustand F+ liegt die maximale Gurtspannung höher als die bei dem Punkt F+ erreichte Gurtspannung.

Der angestrebte Gurtspannungsbereich kann konstruktiv beeinflusst werden z. B. durch einen Durchmesser des Federstabes, eine Länge des Federstabes und/oder eine Einteilung der Arretierungsbohrungen G (geringerer Lochabstand ergibt einen geringeren Toleranzbereich zwischen minimaler und maximaler Gurtspannung). Weiter kann die Länge des Federstabes durch den Anwender einstellbar sein, was einen individuell wählbaren Gurtspannungsbereich ermöglicht.

Wenn der Sperrbolzen 1C in eine der Arretierungsbohrungen G an der Spange S einrastet, dann ist die zweite Verriegelungsstufe erreicht. Das heißt, dass in der zweite Verriegelungsstufe die Spannvorrichtung E formschlüssig gesperrt ist.

Durch das Einrasten des Sperrbolzen 1C in der Spange S ist eine formschlüssige Verbindung zwischen der Kupplung 1 und der Spange S entstanden. Ein weiteres Spannen durch den Anwender ist nun nicht mehr möglich.

Falls beim Erreichen des Zustands F+ eine der Arretierungsbohrungen G derart positioniert ist, dass der Sperrbolzen 1C direkt in diese Arretierungsbohrung G eingreifen/einrasten kann, so kann der Verriegelungsmechanismus V direkt von der ersten Verriegelungsstufe in die zweite Verriegelungsstufe übergehen, ohne dass ein weiteres Spannen des Gurtes C nötig ist.

FIG 5 zeigt die Spannvorrichtung E aus FIG 1 in ihrem verriegelten Zustand, wobei sich der Verriegelungsmechanismus V in seiner zweiten Verriegelungsstufe befindet.

Nach Beendigung des Spannvorgangs endet die Krafteinleitung durch den Anwender, und das als Federstab ausgebildete dynamisch wirkende Element 2 stellt aufgrund seiner Federwirkung den Spannhebel 9 von der Stellung des Punktes F+ (FIG 4) zurück auf die ursprüngliche Stellung an Punkt F0 (vgl. FIG 3).

Da der Sperrbolzen 1C in der zweiten Verriegelungsstufe des Verriegelungsmechanismus V in eine der Arretierungsbohrungen G der Spange S eingreift, ist der Sperrbolzen 1C nun derart positioniert, dass die Nase N des Spannhebels 9 zwischen den beiden Positionsringen PR des Sperrbolzens 1C greifen kann.

In dieser Stellung wird der Sperrbolzen 1C durch einen seiner zwei Positionsringe PR, hier den zeichnungsgemäß unteren Positionsring PR, und der Nase N des Spannhebels 9 gegen ein Herausziehen (Entsichern der Spannvorrichtung) gesperrt.

Auf diese Weise wird der Verrieglungsmechanismus V in der zweiten Verriegelungsstufe gesichert. Insbesondere wird auf diese Weise der Sperrbolzen 1C in der zweiten Verriegelungsstufe festgesetzt.

In FIG 5 ist die zweite Verriegelungsstufe des Verrieglungsmechanismus V im gesicherten Zustand dargestellt.

Ein Entsichern des Sperrbolzens 1C, d. h. ein Entsperren der Spannvorrichtung E, ist durch den Anwender nur nach einem vordefinierten Ablauf möglich. Auf diese Weise kann ein versehentliches Entsperren vermieden werden. Insbesondere ist ein zufälliges oder ungewolltes Entsichern somit ausgeschlossen.

Ein Entsichern des Sperrbolzens 1C, d. h. ein Entsperren der Spannvorrichtung E, ist ausgehend von der zweiten Verriegelungsstufe im gesicherten Zustand (FIG 5) mittels einer Zwei-Hand-Zwangs-Entsicherung möglich:
Zum Entsichern ist der Spannhebel 9 durch den Anwender mindestens auf die Stellung des Punktes F+ zu bringen. Beim Erreichen des Punktes F+ ist die Nase N des Spannhebels 9 wieder soweit ausgerückt, dass der Sperrbolzen 1C ungehindert von Hand aus der Spange S gezogen werden kann.

Beim Zurückdrehen des Spannhebels 9 mit gleichzeitig gezogenem Sperrbolzen 1C rückt die Nase N des Spannhebels 9 bedingt durch die Kraft des dynamisch wirkenden Elements 2 in ihre Grundstellung F0 zurück. Dabei wird der Sperrbolzen 1C nun wieder an einem der Positionsringe PR, hier dem unteren Positionsring PR, durch die Nase N des Spannhebels 9 im gezogenen (entsperrten) Zustand gehalten und der Gurt C kann ungehindert durch weiteres Zurückdrehen des Spannhebels 9 komplett entspannt werden.

FIG 6 zeigt schematisch ein Spannsystem A mit der als Gurtspannvorrichtung ausgebildeten Spannvorrichtung E aus FIG 1. Das Spannsystem A ist dreidimensional dargestellt. In diesem Beispiel ist ein Gurt C in das Spannsystem A, und somit auch in die Spannvorrichtung E eingelegt.

Das Spannsystem A ist in diesem Beispiel ein stationär befestigtes und um 180° drehbares Spannsystem A. Die Spange S ist in diesem Beispiel als drehbare Spange S ausgeführt.

Das Spannsystem A umfasst einen automatischem Gurteinzug B. Die Spange S dient zur Befestigung der Rolle für den automatischen Gurteinzug B. Das heißt, dass der automatische Gurteinzug B in der Spange S befestigt ist. Im Innenbereich des Gurteinzuges B befindet sich eine vorgespannte Drehfeder (nicht dargestellt).

Die Drehfeder wird beim Herausziehen des Gurtes C zusätzlich weitergespannt. Beim Lösen der Spannvorrichtung E wickelt die Drehfeder den Gurt C wieder auf die Rolle des Gurteinzuges B auf.

Das eigentliche Spannen und Sichern des Gurtes C übernimmt dabei die Spannvorrichtung E.

Der Gurt C liegt zumindest an dem Drehelement 5 der Spannvorrichtung E an. In diesem Beispiel ist der Gurt C durch das Drehelement 5 hindurchgeführt. Insbesondere ist der Gurt C zwischen den beiden als Bolzen ausgeführten stabförmigen Elementen D des Drehelements 5 hindurchgeführt.

Durch das Drehen der Kurbel 12 der Spannvorrichtung E wird die vom Anwender ausgeübte Kraft auf die Kupplung 1 der Spannvorrichtung E übertragen, sodass das mit der Kupplung 1 verbundene Drehelement 5 gedreht wird. Aufgrund der Drehbewegung wird der Gurt C von dem Drehelement 5, insbesondere von den stabförmigen Elementen D des Drehelements 5, aufgewickelt. Das heißt, durch das Drehen der Kurbel 12 der Spannvorrichtung E wird der Gurt C aufgewickelt.

Das Aufwickeln des Gurtes C führt bis zur kraftabhängigen Arretierung der Spannvorrichtung E zu einer kontinuierlichen Straffung des Gurtes C, d. h. zu einem Spannen des Gurtes C. Die kraftabhängige als Gurtspannvorrichtung ausgebildete Spannvorrichtung E kann auch in anderen Systemen als dem eben beschriebenen Spannsystem A verwendet werden. Mögliche Beispiele für solche Systeme sind stationäre und temporäre Sicherheitsabsperrungen, in Fahrzeugen integrierte Ladungssicherungen und/oder lose Spannsysteme ohne Gurteinzug. Die Spannvorrichtung E kann auch in einem Spannsystem in einem Bereich mit hohen Sicherheitsanforderungen eingesetzt werden, wie z. B. zur Personensicherung.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung, in den Ansprüchen definiert, zu verlassen.

### Bezugszeichenliste

- 1: Kupplung
- 1A: Führungsrohr
- 1B: Druckfeder
- 1C: Sperrbolzen
- 1D: Aussparung
- 2: dynamisch wirkendes Element
- 5: Drehelement
- 9: Spannhebel
- 12: Kurbel
- A: Spannsystem
- B: Gurteinzug
- C: Gurt
- D: stabförmiges Element, insbesondere Bolzen
- E: Spannvorrichtung
- F0: unbelasteter Zustand
- F+: Zustand maximaler Kraftübertragung
- G: Arretierungsbohrung
- N: Nase
- M: Mitnahmeklaue
- PR: Positionsring
- S: Spange
- V: Verriegelungsmechanismus

## Patentansprüche

1. Spannvorrichtung (E) für Bänder (C), insbesondere für Gurte (C), mit einem dynamisch wirkenden Element (2), mittels welchem eine Kraftübertragung bei der Spannvorrichtung (E) indirekt erfolgt,
**gekennzeichnet durch**
einen Verriegelungsmechanismus (V), welcher dazu eingerichtet ist, in Abhängigkeit der mittels des dynamisch wirkenden Elements (2) übertragenen Kraft die Spannvorrichtung (E) zu verriegeln.

2. Spannvorrichtung (E) nach einem der vorhergehenden Ansprüche,
**gekennzeichnet durch**
eine Kupplung (1) und ein mit der Kupplung (1) verbundenes Drehelement (D),
wobei die Spannvorrichtung (E) dazu eingerichtet ist, eine Kraft indirekt über das dynamisch wirkende Element (2) auf die Kupplung (1) zu übertragen, sodass das Drehelement (D), insbesondere zum Spannen eines Bandes (C), gedreht wird.

3. Spannvorrichtung (E) nach Anspruch 1 oder 2,
**dadurch gekennzeichnet,**
**dass** das dynamisch wirkende Element (2) unter der Kraftübertragung verbiegbar und/oder verdrehbar ist.

4. Spannvorrichtung (E) nach einem der vorhergehenden Ansprüche,
**dadurch gekennzeichnet,**
**dass** das dynamisch wirkende Element (2) eine kraftabhängige Verbiegung und/oder Verdrehung aufweist.

5. Spannvorrichtung (E) nach einem der vorhergehenden Ansprüche,
**dadurch gekennzeichnet,**
**dass** der Verriegelungsmechanismus (V) dazu eingerichtet ist, bei einer vorgegebenen Verbiegung und/oder Verdrehung des dynamisch wirkenden Elements (2) die Spannvorrichtung (E) zu verriegeln.

6. Spannvorrichtung (E) nach einem der vorhergehenden Ansprüche,
welche dazu eingerichtet ist, dass die Kraftübertragung bis zur Verriegelung der Spannvorrichtung (E) mittels des dynamisch wirkenden Elements (2) erfolgt.

7. Spannvorrichtung (E) nach einem der vorhergehenden Ansprüche,
**dadurch gekennzeichnet,**
**dass** der Verriegelungsmechanismus (V) zur Verriegelung der Spannvorrichtung (E) eine Verriegelungsstufe umfasst,
die zur formschlüssigen Sperrung der Spannvorrichtung (E) eingerichtet ist.

8. Spannvorrichtung (E) nach einem der vorhergehenden Ansprüche,
**gekennzeichnet durch**
einen Spannhebel (9), welcher sich bei der indirekten Kraftübertragung mittels des dynamisch wirkenden Elements (2) im Leerlauf befindet.

9. Spannvorrichtung (E) nach Anspruch 8,
**dadurch gekennzeichnet,**
**dass** der Verriegelungsmechanismus (V) zur Verriegelung der Spannvorrichtung (E) zwei Verriegelungsstufen umfasst, und dass der Spannhebel (9) zur formschlüssigen Kraftübertragung zwischen den beiden Verriegelungsstufen des Verriegelungsmechanismus (V) eingerichtet ist.

10. Spannvorrichtung (E) nach einem der vorhergehenden Ansprüche,
**dadurch gekennzeichnet,**
**dass** das dynamisch wirkende Element (2) ein Federstab (2) ist.

11. Spannvorrichtung (E) nach einem der Ansprüche 1 bis9,
**dadurch gekennzeichnet,**
**dass** das dynamisch wirkende Element (2) eine Schenkelfeder ist.

12. Spannvorrichtung (E) nach einem der Ansprüche 1 bis 9,
**dadurch gekennzeichnet,**
**dass** das dynamisch wirkende Element (2) eine Drehfeder ist.

13. Spannvorrichtung (E) nach einem der Ansprüche 1 bis9,
**dadurch gekennzeichnet,**
**dass** das dynamisch wirkende Element (2) ein Torsionselement ist.

14. Verwendung der Spannvorrichtung (E) nach einem der vorhergehenden Ansprüche zum Spannen eines Bandes (C), insbesondere eines Gurtes (C),
**dadurch gekennzeichnet,**
**dass** ein Band (C) derart in die Spannvorrichtung (E) eingelegt wird oder ist, dass das Band (C) zumindest an einem Drehelement (D) der Spannvorrichtung (E) anliegt,
und **dass** eine Kraft indirekt über das dynamisch wirkende Element (2) auf eine Kupplung (1) der Spannvorrichtung (E) übertragen wird, sodass das mit der Kupplung (1) verbundene Drehelement (D) gedreht wird, wobei das Band (C) bei der Drehbewegung des Drehelements (D) gespannt wird.

## Claims

1. Tensioning device (E) for straps (C), in particular for belts (C), with a dynamically acting element (2) by means of which force is transmitted indirectly at the tensioning device (E),
**characterized by**
a locking mechanism (V) which is configured to lock the tensioning device (E) depending on the force transmitted by means of the dynamically acting element (2).

2. Tensioning device (E) according to one of the preceding claims,
**characterized by**
a coupling (1) and a rotary element (D) connected to the coupling (1),
wherein the tensioning device (E) is configured to transmit a force indirectly via the dynamically acting element (2) to the coupling (1) such that the rotary element (D) is rotated, in particular for tensioning a strap (C).

3. Tensioning device (E) according to Claim 1 or 2,
**characterized**
**in that** the dynamically acting element (2) is bendable and/or twistable under the transmission of force.

4. Tensioning device (E) according to one of the preceding claims,
**characterized**
**in that** the dynamically acting element (2) has a force-dependent bending and/or twisting.

5. Tensioning device (E) according to one of the preceding claims,
**characterized**
**in that** the locking mechanism (V) is configured to lock the tensioning device (E) at a predetermined bending and/or twisting of the dynamically acting element (2).

6. Tensioning device (E) according to one of the preceding claims,
which is configured such that force is transmitted by means of the dynamically acting element (2) until the tensioning device (E) is locked.

7. Tensioning device (E) according to one of the preceding claims,
**characterized**
**in that** the locking mechanism (V) for locking the tensioning device (E) comprises a locking stage which is configured for form-fitting locking of the tensioning device (E).

8. Tensioning device (E) according to one of the preceding claims,
**characterized by**
a tensioning lever (9) which is in idle mode during the indirect transmission of force by means of the dynamically acting element (2).

9. Tensioning device (E) according to Claim 8,
**characterized**
**in that** the locking mechanism (V) for locking the tensioning device (E) comprises two locking stages, and in that the tensioning lever (9) is configured for form-fitting transmission of force between the two locking stages of the locking mechanism (V).

10. Tensioning device (E) according to one of the preceding claims,
**characterized**
**in that** the dynamically acting element (2) is a spring rod (2).

11. Tensioning device (E) according to one Claims 1 to 9,
**characterized**
**in that** the dynamically acting element (2) is a leg spring.

12. Tensioning device (E) according to one of Claims 1 to 9,
**characterized**
**in that** the dynamically acting element (2) is a torsion spring.

13. Tensioning device (E) according to one of Claims 1 to 9,
**characterized**
**in that** the dynamically acting element (2) is a torsion element.

14. Use of the tensioning device (E) according to one of the preceding claims for tensioning a strap (C), in particular a belt (C),
**characterized**
**in that** a strap (C) is or has been placed into the tensioning device (E) in such a manner that the strap (C) lies at least against a rotary element (D) of the tensioning device (E),
and **in that** a force is indirectly transmitted via the dynamically acting element (2) to a coupling (1) of the tensioning device (E) such that the rotary element (D) which is connected to the coupling (1) is rotated, with the strap (C) being tensioned during the rotational movement of the rotary element (D) .

## Revendications

1. Dispositif de serrage (E) pour des bandes (C), en particulier pour des sangles (C), comprenant un élément à effet dynamique (2) au moyen duquel une transmission de force est effectuée indirectement au niveau du dispositif de serrage (E),
**caractérisé par** un mécanisme de verrouillage (V) qui est aménagé pour verrouiller le dispositif de serrage (E) en fonction de la force transmise au moyen de l'élément à effet dynamique (2).

2. Dispositif de serrage (E) selon l'une quelconque des revendications précédentes, **caractérisé par** un accouplement (1) et par un élément rotatif (D) relié à l'accouplement (1),
le dispositif de serrage (E) étant aménagé pour transmettre une force à l'accouplement (1) indirectement par l'intermédiaire de l'élément à effet dynamique (2) de sorte que l'élément rotatif (D) est mis en rotation, en particulier pour le serrage d'une bande (C).

3. Dispositif de serrage (E) selon la revendication 1 ou 2, **caractérisé en ce que** l'élément à effet dynamique (2) peut être déformé et/ou tordu sous l'effet de la transmission de force.

4. Dispositif de serrage (E) selon l'une quelconque des revendications précédentes, **caractérisé en ce que** l'élément à effet dynamique (2) présente une déformation et/ou une torsion dépendant de la force.

5. Dispositif de serrage (E) selon l'une quelconque des revendications précédentes, **caractérisé en ce que** le mécanisme de verrouillage (V) est aménagé pour verrouiller le dispositif de serrage (E) lors d'une déformation et/ou d'une torsion prédéfinie(s) de l'élément à effet dynamique (2).

6. Dispositif de serrage (E) selon l'une quelconque des revendications précédentes, qui est aménagé de telle sorte que la transmission de force jusqu'au verrouillage du dispositif de serrage (E) est effectuée au moyen de l'élément à effet dynamique (2).

7. Dispositif de serrage (E) selon l'une quelconque des revendications précédentes, **caractérisé en ce que** le mécanisme de verrouillage (V) comprend pour le verrouillage du dispositif de serrage (E) un niveau de verrouillage qui est aménagé pour le verrouillage du dispositif de serrage (E) par complémentarité de forme.

8. Dispositif de serrage (E) selon l'une quelconque des revendications précédentes, **caractérisé par** un levier de serrage (9) qui se trouve au point mort lors de la transmission de force indirecte au moyen de l'élément à effet dynamique (2).

9. Dispositif de serrage (E) selon la revendication 8, **caractérisé en ce que** le mécanisme de verrouillage (V) comprend deux niveaux de verrouillage pour le verrouillage du dispositif de serrage (E), et **en ce que** le levier de serrage (9) est aménagé pour la transmission de force par complémentarité de forme entre les deux niveaux de verrouillage du mécanisme de verrouillage (V).

10. Dispositif de serrage (E) selon l'une quelconque des revendications précédentes, **caractérisé en ce que** l'élément à effet dynamique (2) est une barre de torsion (2).

11. Dispositif de serrage (E) selon l'une quelconque des revendications 1 à 9, **caractérisé en ce que** l'élément à effet dynamique (2) est un ressort à branches.

12. Dispositif de serrage (E) selon l'une quelconque des revendications 1 à 9, **caractérisé en ce que** l'élément à effet dynamique (2) est un ressort de torsion.

13. Dispositif de serrage (E) selon l'une quelconque des revendications 1 à 9, **caractérisé en ce que** l'élément à effet dynamique (2) est un élément de torsion.

14. Utilisation du dispositif de serrage (E) selon l'une quelconque des revendications précédentes pour le serrage d'une bande (C), en particulier d'une sangle (C), **caractérisée en ce qu'**une bande (C) sera ou est placée dans le dispositif de serrage (E) de telle sorte que la bande (C) est appliquée au moins sur un élément rotatif (D) du dispositif de serrage (E), et **en ce qu'**une force est transmise indirectement par l'élément à effet dynamique (2) à un accouplement (1) du dispositif de serrage (E) de sorte que l'élément rotatif (D) relié à l'accouplement (1) est mis en rotation, la bande (C) étant serrée lors de la rotation de l'élément rotatif (D).
